# EUROPEAN PATENT SPECIFICATION

(11) **EP 1 609 709 B1**
(45) Date of publication and mention of the grant of the patent: **05.03.2014**
(21) Application number: 05011627.6
(22) Date of filing: 30.05.2005
(51) Int. Cl.: B62J 35/00

(54) **Vehicle**
Fahrzeug
Véhicule

(30) Priority: 31.05.2004 JP 2004162178
(43) Date of publication of application: 28.12.2005
(73) Proprietor: Yamaha Hatsudoki Kabushiki Kaisha, Iwata-shi, Shizuoka-ken (JP)
(72) Inventor: Suzuki, Satoshi, Iwata-shi Shizuoka-ken (JP); Hirano, Fumito, Iwata-shi Shizuoka-ken (JP)
(74) Representative: Grünecker, Kinkeldey, Stockmair & Schwanhäusser

(56) References cited:
- JP-A- 7 149 270
- JP-A- 9 024 875
- JP-A- 9 058 551
- JP-A- 10 236 365
- JP-A- 60 174 375
- JP-A- 2003 072 634
- US-A1- 2003 075 659

## Description

The present invention relates to a vehicle, in particular a vehicle that makes a motion such as turning with a body thereof slanted, according to the preamble of claim 1. Such a vehicle is known from US 2003/075659 A1.

Conventionally, in an intake structure of a vehicle described in JP-A-2002-295344, a fuel injection valve of a fuel injection device is arranged so as to inject fuel upward into an intake passage to make it easy to remove the air contained in the fuel. In addition, an engine and the fuel injection device are arranged in parallel, a fuel tank is arranged to cover the engine and the fuel injection device, and a bottom of the fuel tank on the fuel injection device is set lower than a bottom of the fuel tank on the engine to increase a capacity of the fuel tank and a degree of freedom of design.

However, in the conventional intake structure of the vehicle, a layout of a fuel pipe for sending fuel from a bottom of the fuel tank, which is set low, to the fuel injection valve is not taken into account at all. Although the fuel pipe connects the bottom of the fuel tank, which is set low, and the fuel injection valve projecting to below a throttle body, a space for disposing the fuel pipe, interference with members around the fuel pipe, and the like are not taken into account.

Thus, it is an objective of the present invention to provide a vehicle as indicated above, in which a fuel pipe is arranged in a compact manner while securing a necessary length to improve maintainability for the members around the fuel tank.

This objective is solved in an inventive manner by a vehicle in accordance with claim 1. Such a vehicle, in particular two-wheeled vehicle, comprises a body frame, an engine that is supported on the body frame and a fuel tank, wherein the fuel tank is swingably supported on the body frame.

Accordingly, it is possible to arrange a fuel pipe in a compact manner while securing a necessary length of the fuel pipe to improve maintainability for the members around the fuel tank.

A fuel pipe connecting a fuel delivery section formed on a lower surface of the fuel tank and a fuel supply device are provided, the fuel pipe having, in an intermediate part thereof, a bent section, wherein the fuel pipe is provided such that the bent section is arranged in a position closer to a swing center of the fuel tank than the fuel delivery section and the fuel supply device when viewed from a side of the vehicle. An angle of the bent section of the fuel pipe may be changeable.

According to a preferred embodiment, a fuel pump that is provided inside the fuel tank and supplies fuel to the fuel delivery section formed on the lower surface of the fuel tank is provided.

Yet further, preferably the fuel supply device is provided below the fuel tank and supplies the fuel to the engine.

It is beneficial if the bent section is provided to be located above the fuel supply device and the fuel delivery section when viewed from the side of the vehicle. It is further beneficial if the fuel pipe between the bent section and the fuel delivery section is provided along the lower surface of the fuel tank. Yet further, it is beneficial if the fuel delivery section is arranged above the body frame when viewed from the side of the vehicle, and the fuel pipe is provided such that the bent section is located above the body frame when viewed from the side of the vehicle. Still further, it is beneficial if the fuel delivery section and the body frame below the fuel supply device and the fuel tank are located in a center of left and right of the vehicle.

Additionally, the intermediate part having the bent section of the fuel pipe may be formed of a flexible material.

Moreover, the body frame may comprise a main frame and a sub-frame, both being located in a center of a vehicle width direction.

According to a further preferred embodiment, a front portion of the fuel tank is rotatably supported by a main frame and a rear portion of the fuel tank is supported by a sub-frame, wherein a rear end of the fuel tank is liftable upward to rotate the fuel tank about a swing center.

Therein, it is beneficial if the front portion of the fuel tank is supported on the main frame with a space provided therebetween and the rear portion of the fuel tank is supported on the sub-frame with a space provided therebetween, wherein the fuel supply pipe is arranged in said spaces.

In the following, the present invention is explained in further detail with respect to several embodiments thereof in conjunction with the accompanying drawings, wherein:
- Fig. 1: is a left side view of an embodiment of a motorcycle;
- Fig. 2: is an enlarged left side view showing a structure inside and around a fuel tank in Fig. 1;
- Fig. 3: is a sectional view along line A-A in Fig. 2;
- Fig. 4: is a sectional view along line B-B in Fig. 2;
- Fig. 5: is a diagram showing a state in which the fuel tank in Fig. 2 is turned and opened to the front of a vehicle around a swing center; and
- Fig. 6: is a diagram showing an example of another structure of a fuel supply pipe.

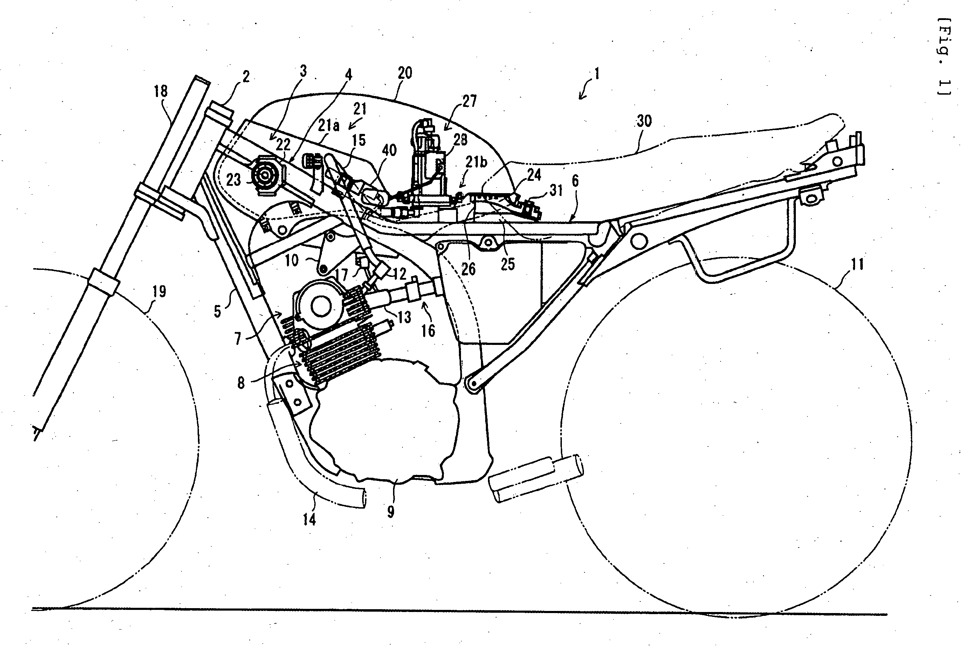

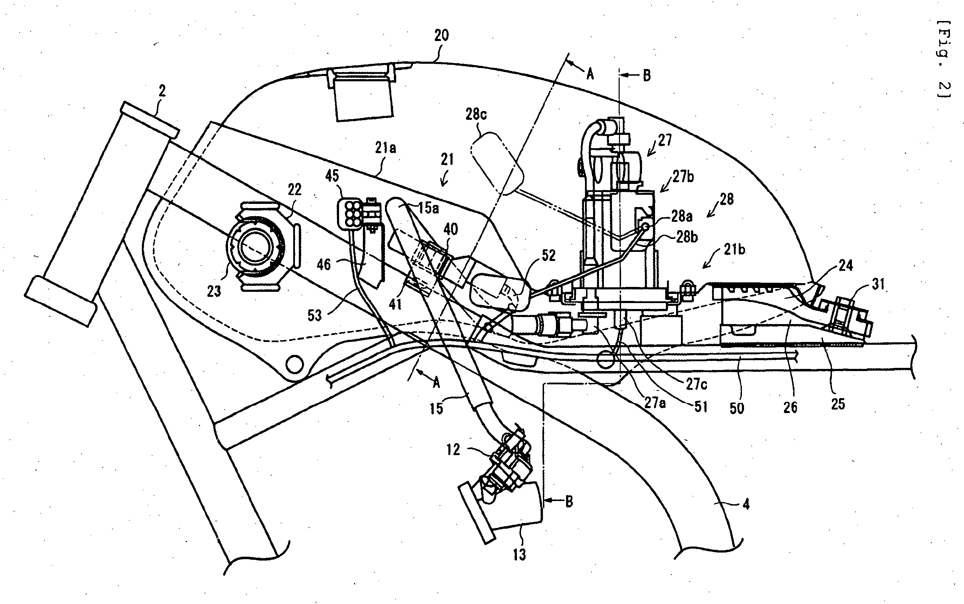

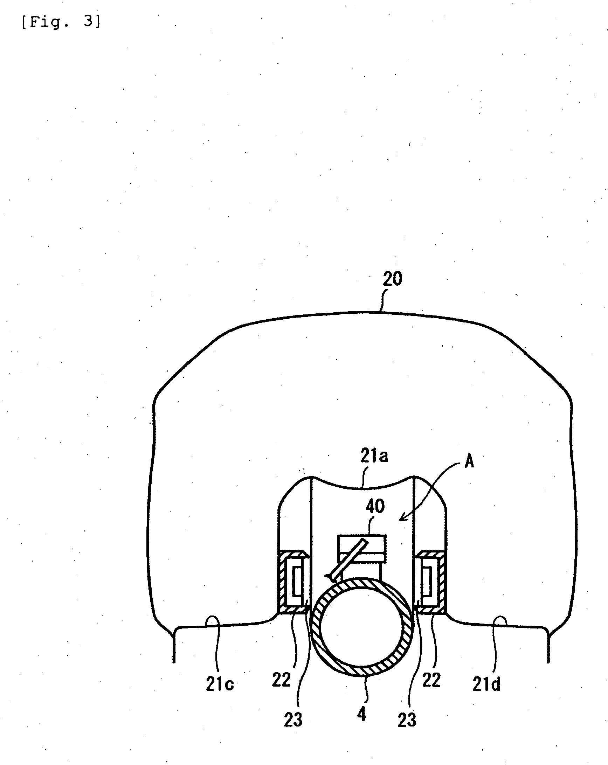

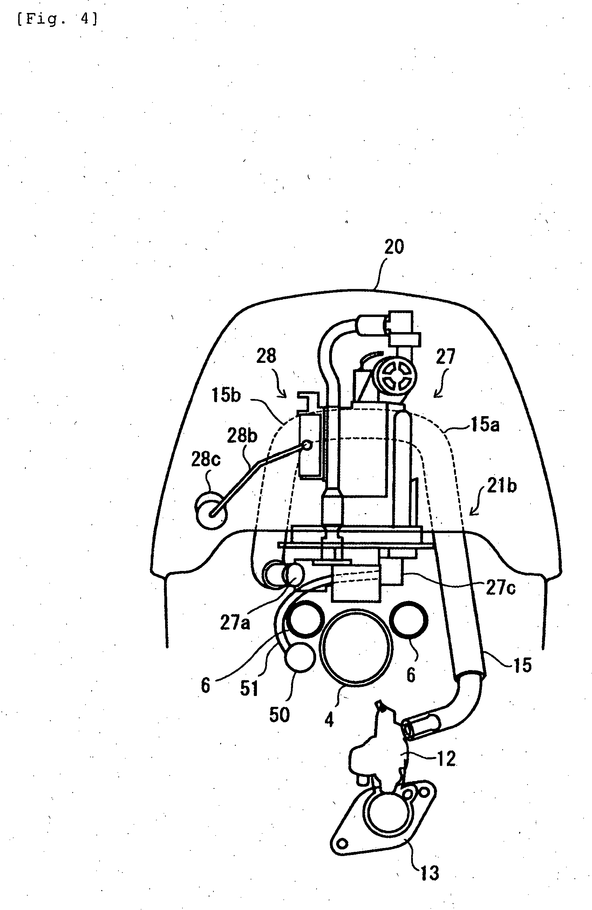

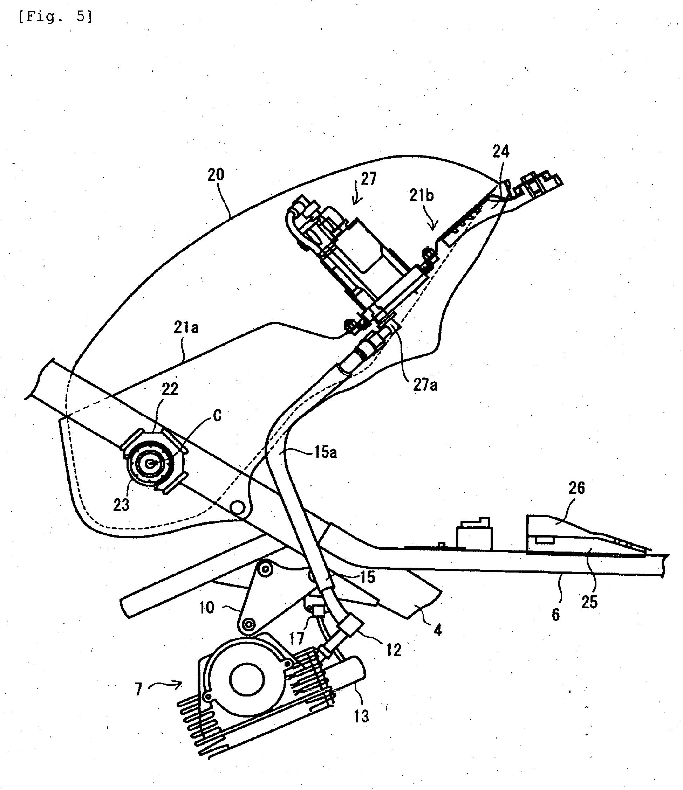

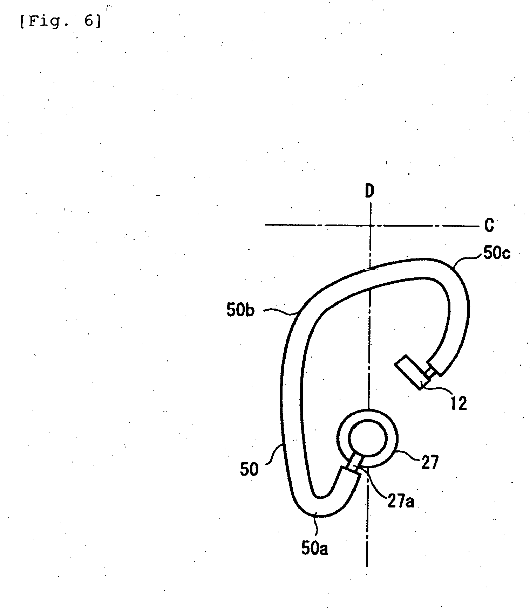

In the explanation, the embodiment of Fig. 1 is applied to a motorcycle. Figs. 1 to 6 are diagrams for explaining the motorcycle in the embodiment. Fig. 1 is a left side view of the motorcycle, Fig. 2 is an enlarged left side view showing a structure in a fuel tank and around the fuel tank in Fig. 1, Fig. 3 is a sectional view cut along line A-A in Fig. 2, Fig. 4 is a sectional view cut along line B-B in Fig. 2, Fig. 5 is a diagram showing a state in which the fuel tank in Fig. 2 is turned and opened, and Fig. 6 is a diagram showing an example of another structure of a fuel supply pipe.

First, a structure of the motorcycle will be explained with reference to Fig. 1. In Fig. 1, in a motorcycle 1, one main frame 4 extending obliquely downward to the rear and a down tube 5 extending downward are connected to a head pipe 2. A sub-frame 6 extending to the rear substantially in horizontal at a certain angle with respect to the main frame 4 is connected to the main frame 4. An engine unit 7 integral with a transmission is housed in a space formed by the main frame 4, the down tube 5, and the sub-frame 6. The main frame 4 and the sub-frame 6 are located in the center in a vehicle width direction and constitute a body frame 3.

In the engine unit 7, a cylinder shaft of a cylinder block 8 is inclined slightly to the front of the body and a transmission case 9, which is located under the cylinder block 8 and houses a crankshaft and the transmission, is suspended and supported by the main frame 4 and the down tube 5 toward the vehicle width direction. An upper end of the engine unit 7 is fixed to a bracket 10 that is fixed to the main frame 4. By a not-shown drive sprocket locked to a drive shaft of the engine unit 7 and a not-shown chain wound around this drive sprocket, engine power is transmitted to a rear wheel 11 through the chain.

An injector 12 serving as a fuel supply device, an intake pipe 13, and an exhaust pipe 14 are connected to the cylinder block 8. The injector 12 has a fuel supply pipe 15 connected at an upper end thereof and injects fuel into a cylinder according to the control of a control unit 40. A throttle body 16 is connected to the intake pipe 13. The intake pipe 13 adjusts an amount of intake air, which is supplied from a not-shown air cleaner, with a throttle valve (not shown) in the throttle body 16 and supplies the air into the cylinder. An intake air pressure sensor 17 is connected to an intake port section (not shown) in the intake pipe 13. The intake air pressure sensor 17 has a function of detecting an intake air pressure in the intake port section and outputs a detection signal of the intake air pressure to the control unit 40.

A not-shown steering shaft is inserted through the head pipe 2 so as to turn freely. A not-shown steering handle is attached to an upper end of the steering shaft. In addition, an upper end of a front fork 18 is attached to the steering shaft. A front wheel 19 is supported at a lower end of the front fork 18 so as to rotate freely.

A fuel tank 20 is provided above the main frame 4 and the sub-frame 6. A tandem seat 30 is provided behind the fuel tank 20. As shown in an enlarged left side view of the fuel tank and the body frame in Fig. 2, a bottom surface front center section 21a is formed in a front center of a bottom surface section 21 of the fuel tank 20 when viewed from a side of the vehicle in the figure. A flat section 21b is formed behind the bottom surface front center section 21a so as to be parallel with a parallel section of the sub-frame 6. In addition, as shown in Fig. 3, a bottom surface front left side section 21c and a bottom surface front right side section 21d projecting downward from the bottom surface front center section 21a are formed on both left and right sides of the bottom front center section 21a. Note that, when the vehicle is viewed from a side of the vehicle, a left side of the vehicle viewed from the side is set as the front (or the rear) and a right side of the vehicle viewed from the side is set as the rear (or the front). The same holds true for the following description.

Guide brackets 22 of a lateral U shape opening to the front (the left in the figure) are protrudingly provided on respective sidewalls, which are opposed to the main frame 4, in the bottom surface front left side section 21c and the bottom surface front right side section 21d of the fuel tank 20. Positioning members 23 are protrudingly provided on respective sides of the main frame 4 opposed to the guide brackets 22. The front of the fuel tank 20 is supported on the main frame 4 by inserting the guide brackets 22, which are protrudingly provided on the respective sidewalls of the bottom surface front left side section 21c and the bottom surface front right side section 21d, into the positioning members 23 protrudingly provided in opposed positions of the respective sides of the main frame 4.

Respective protrudingly provided positions of the bottom surface front left side section 21c, the bottom surface front right side section 21d, and the respective positioning members 23 of the main frame 4 are determined to form a space A between the bottom surface front center section 21a of the fuel tank 20 and an upper surface of the main frame 4 when the front of the fuel tank 20 is positioned.

A bracket 24 for fixing a rear end of the fuel tank 20 to the sub-frame 6 is attached to a rear (right in the figure) end of the flat section 21b of the fuel tank 20. On the sub-frame 6, a positioning member 25 is protrudingly provided in a position opposed to the bracket 24. The rear end of the fuel tank 20 is supported on the sub-frame 6 by fixing the bracket 24 to the positioning member 25 of the sub-frame 6 with a bolt 31 via a rubber damper 26.

The rear end of the fuel tank 20 is supported on the sub-frame 6 by the bracket 24 and the positioning member 25 of the sub-frame 6, whereby a space B is formed between the flat section 21b of the fuel tank 20 and an upper surface of the sub-frame 6.

The front of the fuel tank 20 is supported on the main frame 4 and the rear end of the fuel tank 20 is supported on the sub-frame 6 as described above, whereby the space A and the space B are made continuous. As a result, it is possible to store plural components in the spaces A and B continuously formed between the bottom surface section 21 of the fuel tank 20 and the respective upper surfaces of the main frame 6 and the sub-frame 4.

It is possible to perform maintenance for the fuel tank 20 by removing the bracket 24 at the rear end thereof from the positioning member 25 to lift the rear end upward with the guide brackets 22 and the positioning members 23 in the front thereof as a swing center C.

As shown in the enlarged left side view showing the structure inside and around the fuel tank in Fig. 2, a fuel pump 27 for delivering fuel in the fuel tank 20 to the fuel supply pipe 15 is vertically provided in the flat section 21b so as to be housed in the fuel tank 20 except a fuel delivery section 27a and a power supply section 27c attached to a lower end of the fuel pump 27. The fuel pump 27 is vertically provided such that a fuel intake section (not shown) is exposed above a surface of the flat section 21b in the fuel tank 20 and the fuel delivery section 27a and the power supply section 27c are exposed below a surface of the flat section 21b on an outer surface of the fuel tank 20.

In the fuel pump 27, a liquid level meter 28 for measuring a quantity of fuel in the fuel tank 20 is integrally attached to a body side 27b thereof. The liquid level meter 28 includes an arm section 28b with a base end thereof attached to a swing shaft 28a so as to swing freely and a float 28c attached to a tip of the arm section 28b.

The float 28c floats on a fuel surface in the fuel tank 20 and the arm section 28b supporting the float 28c swings in response to a change of the fuel surface. The liquid level meter 28 converts a change of a swing position of the float 28c into a change in an angle of the swing shaft 28a to measure a quantity of fuel. In Fig. 2, the float 28c is located in an upper part and a lower part in the fuel tank 20. A not-shown signal/power cable, which is attached from an attached position of the flat section 21b to a surface further on the outer side than the flat section 21b of the fuel tank 20 and connected to the power supply section 27c, is provided in the liquid level meter 28. This signal/power cable is connected to an internal connection terminal (not shown) of the power supply section 27c in the fuel tank 20 and is connected to a main harness 50 through a harness 51 connected to an external connection terminal (not shown) of the power supply section 27c outside the fuel tank 20. The signal/power cable outputs a fuel measurement signal to the control unit 40 through the harness 51 and the main harness 50. In addition, the signal/power cable supplies electric power supplied from a relay 45 to the fuel pump 27 through the harness 51 and the main harness 50.

As shown in Fig. 4 which is a sectional view along line B-B in Fig. 2, a fuel supply pipe 15 is attached to the fuel delivery section 27a of the fuel pump 27. The fuel supply pipe 15 passes through the bottom surface section 21 of the fuel tank 20 using the space B, extends upward on the left side in the front outside the fuel tank 20 from the bottom surface section 21, and forms a bent section 15a near the swing center C of the fuel tank 20 to be connected to the injector 12. In addition, as shown in Fig. 5, in the fuel supply pipe 15, a bent section 15b is also formed on a side where the fuel supply pipe 15 passes through the bottom surface section 21 of the fuel tank 20 from the fuel delivery section 27a.

In the fuel supply pipe 15, a part connected to the fuel delivery section 27a and a part connected to the injector 12 are formed of a metal member. Intermediate parts forming the bent sections 15a and 15b are formed of a flexible member such as rubber. The bent section 15a of the fuel supply pipe 15 is provided to be located closer to a swing center in the front side of the fuel tank 20 than the injector 12 and the fuel delivery section 27a when viewed from the side of the vehicle. The fuel supply pipe 15 has a length not interfering with the fuel tank 20 at the time when the fuel tank 20 is turned and opened.

The fuel supply pipe 15 between the bent sections 15a and 15b and the fuel delivery section 27a is provided along a lower surface of the flat section 21b of the fuel tank 20 using the space B formed between the flat section 21b of the fuel tank 20 and the upper surface of the sub-frame 6. The bent section 15a of the fuel supply pipe 15 is provided to be located above the main frame 4, the injector 12, and the fuel delivery section 27a when viewed from the side of the vehicle.

In the space A formed between the bottom surface front center section 21a of the bottom surface section 21 of the fuel tank 20 and the upper surface of the main frame 6, the control unit 40 for controlling steering of the motorcycle 1 is fixed to the upper surface of the main frame 6 by an attaching member 41. A harness 52 is connected between the control unit 40 and the injector 12, the throttle body 16, the intake air pressure sensor 17, the liquid level meter 28, and the like via the main harness 50. The control unit 40 controls operations of various actuators related to the engine unit 7 on the basis of various detection signals from various sensors. In the space A, a relay 45 for controlling power supply to a control system of the motorcycle 1 is fixed to the upper surface of the main frame 4 by an attaching member 46. A harness 53 is connected to the relay 45 and is connected to the main harness 50. The relay 45 supplies electric power to the injector 12, the throttle body 16, the intake air pressure sensor 17, the liquid level meter 28, the control unit 40, and the like through the harness 53 and the main harness 50. The main harness 50 is disposed along sides of the main frame 4 and the sub-frame 6 and the like.

Fig. 5 shows a state in which the fuel tank 20 is turned and opened to the front of the vehicle with respect to the swing center C. As shown in the figure, in performing an operation for turning and opening the fuel tank 20, after the respective harnesses 51, 52, and 53 of the power supply section 27c, the control unit 40, and the relay 45 are removed, the flat section 21b of the fuel tank 20 rises in a direction to the front of the vehicle, the bent section 15a of the fuel supply pipe 15 extends according to this rising operation, and the fuel supply pipe 15 between the fuel delivery section 27a and the bent section 15a opens mainly upward. In this way, when the fuel tank 20 is turned and opened, since the bent section 15a of the fuel supply pipe 15 extends and the fuel supply pipe 15 between the fuel delivery section 27a and the bent section 15a opens mainly upward, the fuel supply pipe 15 never interferes with the other members and never hinders maintenance.

As described above, in the motorcycle 1 in this embodiment, the bent section 15a of the fuel supply pipe 15 is provided to be located closer to the swing center in the front of the fuel tank 20 than the injector 12 and the fuel delivery section 27a when viewed from the side of the vehicle. The fuel supply pipe 15 has a length not interfering with the fuel tank 20 when the fuel tank 20 is turned and opened. In addition, the fuel supply pipe 15 between the bent section 15a and the fuel delivery section 27a is provided along the lower surface of the flat section 21b of the fuel tank 20 using the space B formed between the flat section 21b of the fuel tank 20 and the upper surface of the sub-frame 6. The bent section 15a is provided to be located above the main frame 4, the injector 12, and the fuel delivery section 27a when viewed from the side of the vehicle.

Therefore, it is possible to arrange the fuel supply pipe in a compact manner while securing a necessary length thereof and improve maintainability. When the fuel tank is turned and opened, the fuel supply pipe between the bend section and the fuel delivery section moves mainly upward. Thus, it is possible to control interference between the fuel supply pipe and the other components and improve maintainability. In addition, when the fuel tank is turned and opened, the fuel supply pipe between the bent section and the fuel delivery section mainly moves and the part of the fuel supply pipe extends along the lower surface of the fuel tank. Thus, it is possible to control interference between the fuel supply pipe and the other components and improve maintainability.

Note that, in the embodiment described above, the fuel supply pipe 15 has the two bent sections 15a and 15b. However, the teaching of the present embodiment is not limited to this. For example, as shown in Fig. 6, a fuel supply pipe 50 having plural bent sections may be used. Fig. 6 shows the fuel pump 27 and the fuel supply pipe 50 viewed from the bottom surface side of the vehicle. In this case, the injector 12 is arranged on the right side with respect to a vehicle center D in the figure and the fuel delivery section 27a is arranged downward to the left with respect to the vehicle center D in the figure. Note that the front of the vehicle is set in the upper part in the figure and the rear of the vehicle is set in the lower part in the figure.

In this case, in the fuel supply pipe 50, a first bend section 50a, a second bent section 50b, and a third bent section 50c are formed in order from a part close to the fuel delivery section 27a. Intermediate parts having these first to the third bent sections 50a to 50c are formed of a flexible member such as rubber. Note that the second bent section 50b is provided to be located above the main frame 4 when viewed from the side of the vehicle.

In this fuel supply pipe 50, the respective intermediate parts including the first bent section 50a and the third bent section 50c are provided along the lower surface of the flat section 21b of the fuel tank 20 using the space A between the bottom surface front center section 21a of the fuel tank 20 and the upper surface of the main frame 4 and the space B formed between the flat section 21b and the upper surface of the sub-frame 6.

When the fuel tank 20 is turned and opened, the fuel supply pipe 50 opens mainly upward in the part between the fuel delivery section 27a and the second bent section 50b. Thus, it is possible to obtain the same advantages as the embodiment described above.

Note that, in the examples of the fuel supply pipes 15 and 50, the intermediate parts having the bent sections are formed of a flexible member. However, the teaching of the present embodiment is not limited to this. For example, it is also possible that the parts having the bent sections are formed of a flexible member and the bent sections are connected by metal pipes or the like. In short, a structure of a fuel supply pipe is not specifically limited as long as parts having bent sections are formed of a flexible member.

In addition, in the examples of the fuel supply pipes 15 and 50, the fuel supply pipes 15 and 50 have one bent section and three bent sections, respectively. However, the teaching of the present embodiment is not limited to this. A fuel supply pipe may have two or four or more bent sections. The number of bent sections is not specifically limited. In addition, respective bent sections of a fuel pipe may be formed of metal pipes having a universal joint function.

The vehicle of the present embodiment adopts a constitution including a body frame; a fuel tank that is swingably supported on the body frame; an engine that is supported on the body frame; a fuel pump that is provided inside the fuel tank and supplies fuel to a fuel delivery section formed on a lower surface of the fuel tank; a fuel supply device that is provided below the fuel tank and supplies the fuel to the engine; and a fuel pipe that connects the fuel delivery section and the fuel supply device and has a bent section, an angle of which is changeable, in an intermediate part thereof, wherein the fuel pipe is provided such that the bent section is in a position closer to a swing center of the fuel tank than the fuel delivery section and the fuel supply device when viewed from a side of the vehicle.

Accordingly, the bent section of the fuel pipe is provided to be located closer to the swing center of the fuel tank than the fuel supply device and the fuel delivery section when viewed from the side of the vehicle. Thus, it is possible to arrange a fuel pipe in a compact manner while securing a necessary length of the fuel pipe to improve maintainability.

The vehicle of the present embodiment adopts a constitution in which the bent section is provided to be located above the fuel supply device and the fuel delivery section when viewed from the side of the vehicle.

Accordingly, since the bent section is provided to be located above the fuel supply device and the fuel delivery section when viewed from the side of the vehicle, when the fuel tank is turned and opened, the part between the bent section and the fuel delivery section mainly moves. Thus, it is possible to control interference between the fuel pipe and the other components and improve maintainability.

The vehicle of the present embodiment adopts a constitution in which the fuel pipe between the bent section and the fuel delivery section is provided along the lower surface of the fuel tank.

Accordingly, since the fuel pipe between the bent section and the fuel delivery section is provided along the lower surface of the fuel tank, when the fuel tank is turned and opened, the part between the bent section and the fuel delivery section mainly moves. Thus, it is possible to control interference between the fuel pipe and the other components and improve maintainability.

The vehicle of the present embodiment adopts a constitution in which the fuel delivery section is arranged above the body frame when viewed from the side of the vehicle and the fuel pipe is provided such that the bent section is located above the body frame when viewed from the side of the vehicle.

Accordingly, since the fuel delivery section and the bent section of the fuel pipe are arranged above the body frame, when the fuel tank is turned and opened, the part between the bent section and the fuel delivery section mainly moves. Thus, it is possible to control interference between the fuel pipe and the other components and improve maintainability.

The vehicle of the present embodiment adopts a constitution in which the fuel delivery section and the body frame below the fuel supply device and the fuel tank are located in the center of the left and the right of the vehicle.

Accordingly, since the fuel delivery section and the body frame below the fuel supply device and the fuel tank are located in the center of the left and the right of the vehicle, it is easy to lay out the fuel pipe connecting the fuel delivery section and the fuel supply device and it is possible to dispose the fuel pipe so as not to interfere with the fuel tank when the fuel tank is turned and opened. Thus, it is possible to control interference between the fuel pipe and the other components and improve maintainability.

The vehicle of the present embodiment adopts a constitution in which the intermediate part having the bent section of the fuel pipe is formed of a flexible material.

Accordingly, since the intermediate part having the bent section of the fuel pipe is formed of a flexible material, it is easy to allow the fuel pipe between plural bent sections and the fuel delivery section to mainly move when the fuel tank is turned and opened. Thus, it is possible to control interference between the fuel pipe and the other components and improve maintainability.

The vehicle according to the present embodiment makes it easy to lay out a fuel pipe connecting a fuel delivery section of a fuel tank and a fuel supply device and is useful for, in particular, a motorcycle and the like in which a body frame is located in the center of the left and the right of the vehicle.

Briefly summarizing the above description of the preferred embodiment to arrange a fuel pipe in a compact manner while securing a necessary length thereof and improve maintainability for members around a fuel tank, in the present vehicle, in performing an operation for turning and opening a fuel tank 20, a flat section 21b of the fuel tank 20 rises in a direction to the front of a vehicle, a bent section 15a of a fuel supply pipe 15 extends according to this rising operation, and the fuel supply pipe 15 between a fuel delivery section 27a and the bent section 15a opens mainly upward. In this way, when the fuel tank 20 is turned and opened, since the bent section 15a of the fuel supply pipe 15 extends and the fuel supply pipe 15 between the fuel delivery section 27a and the bent section 15a opens mainly upward, the fuel supply pipe 15 never interferes with the other members and never hinders maintenance.

Thus, there is formed a bent section, an angle of which is changeable, in an intermediate part of a fuel pipe that connects a fuel delivery section for fuel formed on a lower surface of a fuel tank and a fuel supply device provided below the fuel tank, wherein the bent section is provided close to a swing center position of the fuel tank, and wherein the fuel pipe is arranged in a compact manner while securing a necessary length to improve maintainability for the members around the fuel tank.

## Claims

1. Vehicle, in particular two-wheeled vehicle, comprising
a body frame (3),
an engine (7) that is supported on the body frame (3) and
a fuel tank (20), wherein the fuel tank (20) is swingably supported on the body frame (3),
**characterized by**
a fuel pipe (15) connecting a fuel delivery section (27a) formed on a lower surface (21) of the fuel tank (20) and a fuel supply device (12),
the fuel pipe (15) having, in an intermediate part thereof, a bent section (15a,15b,15c), wherein the fuel pipe (15) is provided such that the bent section (15a,15b,15c) is arranged in a position closer to a swing center (C) of the fuel tank (20) than the fuel delivery section (27a) and the fuel supply device (12) when viewed from a side of the vehicle, and
wherein a front portion of the fuel tank (20) is swingably supported by a main frame (4).

2. Vehicle according to claim 1, **characterized in that** an angle of the bent section (15a,15b,15c) of the fuel pipe (15) is changeable.

3. Vehicle according to one of the claims 1 or 2, **characterized by** a fuel pump (27) that is provided inside the fuel tank (20) and supplies fuel to the fuel delivery section (27a) formed on the lower surface (21) of the fuel tank (20).

4. Vehicle according to one of the claims 1 to 3, **characterized in that** the fuel supply device (27a) is provided below the fuel tank (20) and supplies the fuel to the engine (7).

5. Vehicle according to one of the claims 1 to 4, **characterized in that** the bent section (15a,15b,15c) is provided to be located above the fuel supply device (12) and the fuel delivery section (27a) when viewed from the side of the vehicle.

6. Vehicle according to claim 1 or 5, **characterized in that** the fuel pipe (15) between the bent section (15a,15b,15c) and the fuel delivery section (27a) is provided along the lower surface of the fuel tank (20).

7. Vehicle according to one of the claims 1 to 6, **characterized in that** the fuel delivery section (27a) is arranged above the body frame (3) when viewed from the side of the vehicle, and the fuel pipe (15) is provided such that the bent section (15a,15b,15c) is located above the body frame (3) when viewed from the side of the vehicle.

8. Vehicle according to one of the claims 1 to 7, **characterized in that** the fuel delivery section (27a) and the body frame (3) below the fuel supply device (12) and the fuel tank (20) are located in a center of left and right of the vehicle.

9. Vehicle according to one of the claims 1 to 8, **characterized in that** the intermediate part having the bent section (15a,15b,15c) of the fuel pipe (15) is formed of a flexible material.

10. Vehicle according to one of the claims 1 to 9, **characterized in that** the body frame (3) comprises a main frame (4) and a sub-frame (6), both being located in a center of a vehicle width direction.

11. Vehicle according to one of the claims 1 to 10, **characterized in that** a rear portion of the fuel tank (20) is supported by a sub-frame (6), wherein a rear end of the fuel tank (20) is liftable upward to rotate the fuel tank (20) about a swing center (C).

12. Vehicle according to claim 11, **characterized in that** the front portion of the fuel tank (20) is supported on the main frame (4) with a space (A) provided therebetween and the rear portion of the fuel tank (20) is supported on the sub-frame (6) with a space (B) provided therebetween, wherein the fuel supply pipe (15) is arranged in said spaces (A,B).

## Patentansprüche

1. Fahrzeug, insbesondere ein zweirädriges Fahrzeug, aufweisend
einen Karosserierahmen (3),
eine Brennkraftmaschine (7), die durch den Karosserierahmen (3) abgestützt ist, und
einen Kraftstofftank (20), wobei der Kraftstofftank (20) auf dem Karosserierahmen (3) schwenkbar abgestützt ist,
**gekennzeichnet durch**
ein Kraftstoffrohr (15), das einen Kraftstoffzulieferabschnitt (27a), gebildet an einer unteren Oberfläche (21) des Kraftstofftanks (20), und eine Kraftstoffzuführungsvorrichtung (12) verbindet,
das Kraftstoffrohr (15), das, in einem Zwischenteil desselben, einen gebogenen Abschnitt (15a, 15b, 15c) hat, wobei das Kraftstoffrohr (15) derart vorgesehen ist, dass der gebogene Abschnitt (15a, 15b, 15c) in einer Position näher zu einer Schwenkmitte (C) des Kraftstofftanks (20) als der Kraftstoffzulieferabschnitt (27a) und die Kraftstoffzuführungsvorrichtung (12) angeordnet ist, wenn von einer Seite des Fahrzeuges gesehen, und
wobei ein vorderer Abschnitt des Kraftstofftanks (20) schwenkbar **durch** einen Hauptrahmen (4) abgestützt ist.

2. Fahrzeug nach Anspruch 1, **dadurch gekennzeichnet, dass** ein Winkel des gebogenen Abschnittes (15a, 15b, 15c) des Kraftstoffrohres (15) veränderbar ist.

3. Fahrzeug nach einem der Ansprüche 1 oder 2, **gekennzeichnet durch** eine Kraftstoffpumpe (27), die im Inneren des Kraftstofftanks (20) vorgesehen ist und Kraftstoff zu dem Kraftstoffzulieferabschnitt (27a), gebildet an der unteren Oberfläche (21) des Kraftstofftanks (20), zuführt.

4. Fahrzeug nach einem der Ansprüche 1 bis 3, **dadurch gekennzeichnet, dass** die Kraftstoffzuliefervorrichtung (27a) unter dem Kraftstofftank (20) vorgesehen ist und Kraftstoff zu der Brennkraftmaschine (7) zuführt.

5. Fahrzeug nach einem der Ansprüche 1 bis 4, **dadurch gekennzeichnet, dass** der gebogene Abschnitt (15a, 15b, 15c) vorgesehen ist, oberhalb der Kraftstoffzuführungsvorrichtung (12) und des Kraftstoffzulieferabschnittes (27a) angeordnet ist, wenn von der Seite des Fahrzeuges gesehen.

6. Fahrzeug nach Anspruch 1 oder 5, **dadurch gekennzeichnet, dass** das Kraftstoffrohr (15) zwischen dem gebogenen Abschnitt (15a, 15b, 15c) und dem Kraftstoffzulieferabschnitt (27a) entlang der unteren Oberfläche des Kraftstofftanks (20) vorgesehen ist.

7. Fahrzeug nach einem der Ansprüche 1 bis 6, **dadurch gekennzeichnet, dass** der Kraftstoffzulieferabschnitt (27a) oberhalb des Karosserierahmens (3) angeordnet ist, wenn von der Seite des Fahrzeuges gesehen, und das Kraftstoffrohr (15) derart vorgesehen ist, dass der gebogene Abschnitt (15a, 15b, 15c) oberhalb des Karosserierahmens (3) angeordnet ist, wenn von der Seite des Fahrzeuges gesehen.

8. Fahrzeug nach einem der Ansprüche 1 bis 7, **dadurch gekennzeichnet, dass** der Kraftstoffzulieferabschnitt (27a) und der Karosserierahmen (3) unter der Kraftstoffzuführungsvorrichtung (12) und der Kraftstofftank (20) in der Mitte von links und rechts des Fahrzeuges angeordnet sind.

9. Fahrzeug nach einem der Ansprüche 1 bis 8, **dadurch gekennzeichnet, dass** das Zwischenteil, das einen gebogenen Abschnitt (15a, 15b, 15c) des Kraftstoffrohres (15) hat, aus einem flexiblen Material gebildet ist.

10. Fahrzeug nach einem der Ansprüche 1 bis 9, **dadurch gekennzeichnet, dass** der Karosserierahmen (3) einen Hauptrahmen (4) und einen Subrahmen (6) hat, die beide in einer Mitte einer Richtung in Fahrzeugbreite angeordnet sind.

11. Fahrzeug nach einem der Ansprüche 1 bis 10, **dadurch gekennzeichnet, dass** ein hinterer Abschnitt des Kraftstofftanks (20) durch den Subrahmen (6) abgestützt ist, wobei ein hinteres Ende des Kraftstofftanks (20) nach oben anhebbar ist, um den Kraftstofftank (20) um eine Schwenkmitte (C) zu drehen.

12. Fahrzeug nach Anspruch 11, **dadurch gekennzeichnet, dass** der vordere Abschnitt des Kraftstofftanks (20) auf dem Hauptrahmen (4) mit einem Raum (A) dazwischen abgestützt ist und der hintere Abschnitt des Kraftstofftanks (20) auf dem Subrahmen (6) mit einem Raum (A), vorgesehen dazwischen, abgestützt ist, wobei das Kraftstoffzuführungsrohr (15) in den Räumen (A, B) angeordnet ist.

## Revendications

1. Véhicule, en particulier véhicule à deux roues, comprenant
un châssis (3),
un moteur thermique (7) qui est supporté sur le châssis (3) et
un réservoir d'essence (20) dans lequel le réservoir d'essence (20) est supporté avec une possibilité d'oscillation sur le châssis (3),
**caractérisé par**
un tube à essence (15) reliant la section de fourniture d'essence (27a) formée sur la surface inférieure (21) du réservoir d'essence (20) et un dispositif de fourniture d'essence (12),
le tube à essence (15) possédant, dans une partie intermédiaire, une section coudée (15a, 15b, 15c) dans laquelle le tube à essence (15) est prévu de telle sorte que la section coudée (15a, 15b, 15c) soit agencée dans une position plus proche d'un centre de pivotement (C) du réservoir d'essence (20) que la section de fourniture d'essence (27a) et que le dispositif de fourniture d'essence (12) lorsqu'ils sont vus depuis un côté du véhicule, et
dans lequel une partie avant du réservoir d'essence (20) est supporté avec une possibilité d'oscillations par un châssis principal (4).

2. Véhicule selon la revendication 1, **caractérisé en ce qu'**un angle de la section coudée (15a, 15b, 15c) du tuyau d'essence (15) peut être changé.

3. Véhicule selon l'une des revendications 1 ou 2, **caractérisé par** une pompe à essence (27) qui est ménagée à l'intérieur du réservoir d'essence (20) et qui fournit de l'essence à la section de fourniture d'essence (27a) formée sur la surface inférieure (21) du réservoir d'essence (20).

4. Véhicule selon l'une des revendications 1 à 3, **caractérisé en ce que** le dispositif de fourniture d'essence (27a) est prévu pour être en dessous du réservoir d'essence (20) et qu'il fourni l'essence au moteur thermique (7).

5. Véhicule selon l'une des revendications 1 à 4, **caractérisé en ce que** la section coudée (15a, 15b, 15c) est prévue pour être située au-dessus du dispositif de fourniture d'essence (12) et de la section de fourniture d'essence (27a) lorsqu'elle est vue depuis le côté du véhicule.

6. Véhicule selon la revendication 1 ou 5, **caractérisé en ce que** le tuyau d'essence (15) entre la section coudée (15a, 15b, 15c) et la section de fourniture d'essence (27a) est ménagé le long de la surface inférieure du réservoir d'essence (20).

7. Véhicule selon l'une des revendications 1 à 6, **caractérisé en ce que** la section de fourniture d'essence (27a) est agencée au-dessus du châssis (3) lorsqu'il est vu depuis le côté du véhicule, et le tuyau d'essence (15) est prévu de telle sorte que la section coudée (15a, 15b, 15c) est située au-dessus du châssis (3) lorsqu'il est vu depuis le côté du véhicule.

8. Véhicule selon l'une des revendications 1 à 7, **caractérisé en ce que** la section de fourniture d'essence (27a) et le châssis (3) en dessous du dispositif de fourniture d'essence (12) et du réservoir d'essence (20) sont situés au centre de la gauche et de la droite du véhicule.

9. Véhicule selon l'une des revendications 1 à 8, **caractérisé en ce que** la pièce intermédiaire possédant la section coudée (15a, 15b, 15c) du tuyau d'essence (15) est formée d'un matériau flexible.

10. Véhicule selon l'une des revendications 1 à 9, **caractérisé en ce que** le châssis (3) comprend un châssis principal (4) et un sous châssis (6), les deux étant situés au centre de la direction de la largeur du véhicule.

11. Véhicule selon l'une des revendications 1 à 10, **caractérisé en ce que** la partie arrière du réservoir d'essence (20) est supportée par un sous châssis (6), dans laquelle une partie arrière du réservoir d'essence (20) peut être élevée vers le haut afin de tourner le réservoir d'essence (20) autour d'un centre de pivotement (C).

12. Véhicule selon la revendication 11, **caractérisé en ce que** la partie avant du réservoir d'essence (20) est supportée sur le châssis principal (4), un espace (A) étant prévu entre ceux-ci, et la partie arrière du réservoir d'essence (20) est supportée sur le sous châssis (6), un espace (B) étant prévu entre ceux-ci, dans lequel le tube d'alimentation en essence (15) est agencé dans lesdits espaces (A, B).
